# EUROPEAN PATENT APPLICATION

(11) **EP 4 745 665 A1**
(43) Date of publication of application: **20.05.2026**
(21) Application number: 25215468.7
(22) Date of filing: 13.11.2025
(51) Int. Cl.: G03B 9/06, G03B 35/10, G03B 43/00, H04N 13/207, H04N 23/55, H04N 23/75

(54) **STOP APPARATUS AND OPTICAL APPARATUS**

(30) Priority: 18.11.2024 JP 2024201180
(71) Applicant: Canon Kabushiki Kaisha, Tokyo, 146-8501 (JP)
(72) Inventor: SATO, Katsuhiko, Tokyo, 146-8501 (JP)
(74) Representative: TBK

(57) **Abstract**

A stop apparatus (100) may be configured to determine a light amount in each of a first optical system (201) and a second optical system (301) that are arranged in parallel. The stop apparatus may include a single drive source, a first aperture stop to be driven by the drive source to change the light amount in the first optical system, a second aperture stop to be driven by the drive source to change the light amount in the second optical system, and an adjusting mechanism configured to adjust a light amount passing through one of the first aperture stop and the second aperture stop independently of a light amount passing through the other one of the first aperture stop and the second aperture stop.

## Description

### BACKGROUND

### Technical Field

The present disclosure relates to one or more embodiments of a stop apparatus and an optical apparatus.

### Description of the Related Art

Japanese Patent Application Laid-Open No. 2024-153406 discloses a light-amount control apparatus that controls a single drive source to drive aperture blades in each of two optical systems that constitute a compound-eye optical system.

### SUMMARY

The present disclosure in its first aspect provides a stop apparatus as specified in claims 1 to 8.

The present disclosure in its second aspect provides an optical apparatus as specified in claims 9 and 10.

Features of the present disclosure will become apparent from the following description of embodiments with reference to the attached drawings. The following description of embodiments is described by way of example.

### BRIEF DESCRIPTION OF THE DRAWINGS

Fig. 1 illustrates the configuration of a stereoscopic imaging system having a light-amount control apparatus (stop apparatus) according to each embodiment.
Fig. 2 is a rear perspective view of a light-amount control apparatus according to a first embodiment.
Fig. 3 is an exploded perspective view of the light-amount control apparatus according to the first embodiment.
Figs. 4A, 4B, and 4C illustrate an adjusting mechanism in the light-amount control apparatus according to the first embodiment.
Figs. 5A, 5B, and 5C illustrate an operation of the adjusting mechanism according to the first embodiment.
Figs. 6A and 6B illustrate an effect of the adjusting mechanism according to the first embodiment.
Fig. 7 is a rear view of a light-amount control apparatus according to a second embodiment.
Figs. 8A, 8B, and 8C illustrate an operation of an adjusting mechanism according to the second embodiment.
Fig. 9 is a rear view of a light-amount control apparatus according to a third embodiment.
Figs. 10A, 10B, and 10C illustrate the operation of the adjusting mechanism according to the third embodiment.
Fig. 11 is a perspective view of a lens unit that includes a light-amount control apparatus according to a fourth embodiment.
Fig. 12 illustrates an operation of an adjusting mechanism according to the fourth embodiment.
Figs. 13A and 13B illustrate an effect of the adjusting mechanism according to the fourth embodiment.

### DETAILED DESCRIPTION

Referring now to the accompanying drawings, a detailed description will be given of embodiments according to the disclosure.

### FIRST EMBODIMENT

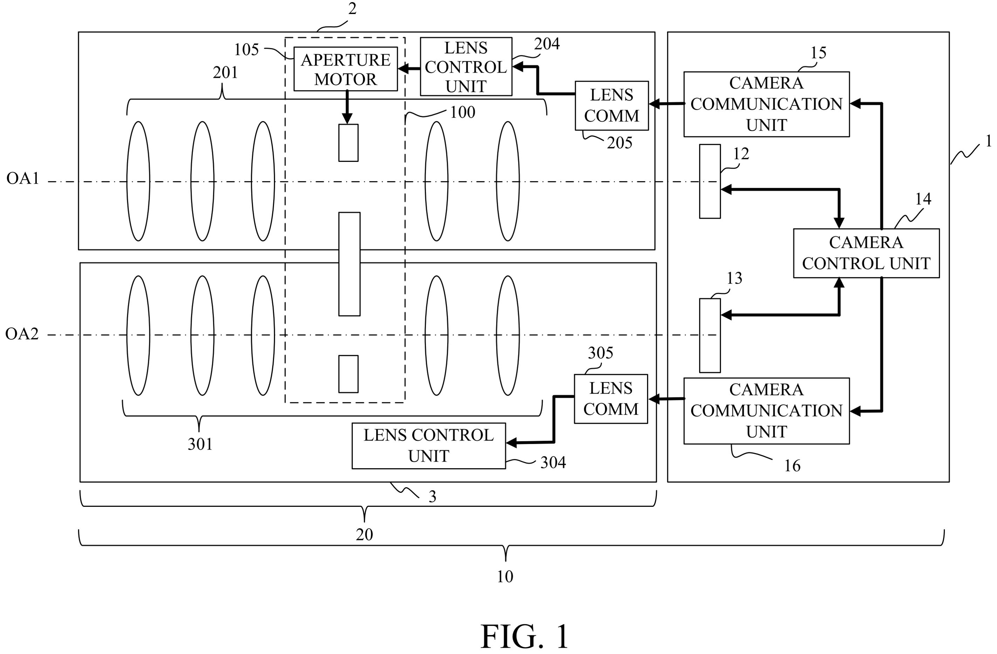

Fig. 1 illustrates the configuration of an image pickup apparatus 10 as an optical apparatus having a light-amount control apparatus (stop apparatus) according to a first embodiment. The image pickup apparatus 10 includes a camera body 1 and a stereoscopic optical unit 20 provided in the camera body 1. The stereoscopic optical unit 20 includes a first optical unit 2 and a second optical unit 3. The stereoscopic optical unit 20 is integrated with the camera body 1 in this embodiment, but may be an interchangeable lens (optical apparatus) that is attachable to and detachable from the camera body 1.

The first optical unit 2 includes a first optical system 201, a lens control unit 204, and a lens communication unit (COMM) 205. The second optical unit 3 includes a second optical system 301, a lens control unit 304, and a lens communication unit 305. The first optical system 201 and the second optical system 301 have the same optical configuration and are arranged in parallel so that their optical axes OA1 and OA2 are parallel to each other. In the following description, the direction in which the optical axes OA1 and OA2 extend will be referred to as an optical axis direction.

The first optical system 201 and the second optical system 301 are driven in the optical axis direction for zooming and focusing by zoom motors and focus motors (not illustrated) as drive sources. The first optical system 201 and the second optical system 301 may include one or more lenses, or include optical elements other than lenses, such as prisms and mirrors. The first optical system 201 and the second optical system 301 may include a shift lens configured to move in a direction perpendicular to the optical axes OA1 and OA2 according to vibration of the image pickup apparatus 10 due to camera shake or the like to reduce (correct) image blur.

The stereoscopic optical unit 20 further includes a single light-amount control apparatus (stop apparatus) 100 commonly provided to the first optical system 201 and the second optical system 301. The light-amount control apparatus 100 includes a first aperture stop provided in the first optical system 201, a second aperture stop provided in the second optical system 301, and an aperture motor 105 as a single drive source commonly provided to the first and second aperture stops. The aperture motor 105 drives the first and second aperture stops to change the aperture diameters of the first and second aperture stops and determines (adjusts) the light amounts passing through the (stop) apertures. In the following description, a light amount passing through the aperture stop will be sometimes simply referred to as a light amount of the aperture stop.

The lens control units 204 and 304 control the zoom motor and focus motor according to zoom commands and focus commands from the camera body 1 via the lens communication units 205 and 305, respectively. The lens control unit 204 also controls the aperture motor 105 according to an aperture command from the camera body 1 via the lens communication unit 205.

The camera body 1 includes a first image sensor 12 that photoelectrically converts (captures) an object image formed by the first optical system 201, and a second image sensor 13 that photoelectrically converts an object image formed by the second optical system 301. The first image sensor 12 and the second image sensor 13 are photoelectric conversion elements such as CMOS sensors or CCD sensors. The camera body 1 further includes a camera control unit 14 that controls the operations of the first image sensor 12 and the second image sensor 13 and sends a variety of commands to the lens control units 204 and 304 via the camera communication units 15 and 16 and the lens communication units 205 and 305. The camera control unit 14 further includes an image processing unit (not illustrated) that performs various processing for image signals from the first image sensor 12 and the second image sensor 13 to generate first and second image data. The first and second image data are displayed as right-eye and left-eye images on an observation device such as a monitor or head-mounted display, allowing the observer to view a stereoscopic image.

In this embodiment, the camera body 1 includes two image sensors 12 and 13 for the two optical systems 201 and 301. However, image signals for generating the first and second image data may also be obtained from two areas on a single image sensor provided for the two optical systems.

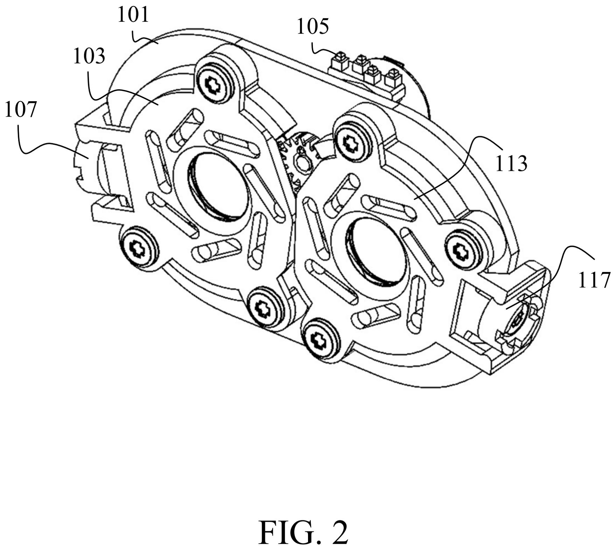

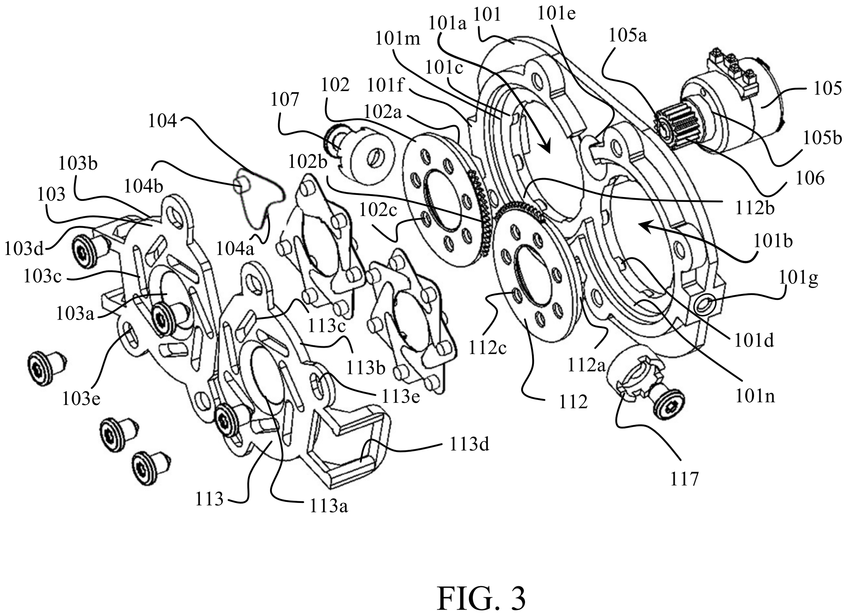

Fig. 2 illustrates a specific structure of the light-amount control apparatus 100. Fig. 3 illustrates an exploded perspective view of the light-amount control apparatus 100.

The light-amount control apparatus 100 includes the first aperture stop including a plurality of (six in this embodiment) aperture blades 104 for the first optical system 201, the second aperture stop including six aperture blades 104 for the second optical system 301, and an opening/closing mechanism that drives the aperture blades 104 to open and close. The opening/closing mechanism includes an aperture motor 105 as a drive source, an aperture base plate 101 as a base member, and a first drive ring 102 as a first rotator (first rotating member). The opening/closing mechanism further includes a second drive ring 112 as a second rotator (second rotating member), a first cam plate 103 as a first holder (first holding member), and a second cam plate 113 as a second holder (second holding member). The opening/closing mechanism further includes a first adjusting mechanism and a second adjusting mechanism. The first adjusting mechanism includes the first cam plate 103 and a first phase adjuster (first phase adjusting member) 107, and the second adjusting mechanism includes the second cam plate 113 and a second phase adjuster (second phase adjusting member) 117. The first and second adjusting mechanisms are mechanisms that allow the light amount of at least one of the first and second aperture stops to be adjusted independently (individually) from the other of the first and second aperture stops.

The aperture motor 105 is a stepping motor, and a pinion gear 106 serving as a drive gear is fixed to its rotary drive shaft 105a so that it can rotate integrally with the motor. The rotary drive shaft 105a is rotatably held by a bearing 105b. Fixing the aperture motor 105 to the aperture base plate 101 can place the rotary drive shaft 105a at a predetermined position relative to the aperture base plate 101. The pinion gear 106 protrudes from a hole 101e formed in the aperture base plate 101 towards the first and second drive rings.

The aperture base plate 101 has a first opening 101a corresponding to the first optical system 201 and a second opening 101b corresponding to the second optical system 301. Fitting receivers 101c are formed at multiple locations around the inner circumference of the first opening 101a, and fitting receivers 101c rotatably fit into (engaged with) fitting receivers 102a provided on the outer circumference of the first drive ring 102. Thereby, the first drive ring 102 can be rotatably held around the central axis of the first opening 101a (i.e., around the optical axis OA1 of the first optical system 201) relative to the aperture base plate 101. Fitting receivers 101d are formed at multiple locations around the inner circumference of the second opening 101b, and fitting receivers 112a provided on the outer circumference of the second drive ring 112 rotatably fit into the multiple fitting receivers 101d. Thereby, the second drive ring 112 can be rotatably held around the central axis of the second opening 101b (i.e., around the optical axis OA2 of the second optical system 301) relative to the aperture base plate 101.

Gear portions 102b and 112b are formed on parts of the outer circumference of the first drive ring 102 and the second drive ring 112, respectively, and a pinion gear 106 is engageable with the gear portions 102b and 112b. Therefore, when the aperture motor 105 is driven and the pinion gear 106 rotates, the first drive ring 102 and the second drive ring 112 rotate in the same direction relative to the aperture base plate 101.

The first aperture stop is an iris diaphragm (iris stop) in which six aperture blades 104 are arranged at equal intervals around the circumference of the first drive ring 102 so that portions of the aperture blades 104 overlap each other in the optical axis direction, forming an aperture stop corresponding to the first optical system 201. Six rotation holes 102c are formed at equal intervals around the circumference of the first drive ring 102. The rotary pins 104a of the six aperture blades 104 rotatably fit into the corresponding rotation holes 102c in the first drive ring 102. The second aperture stop is an iris diaphragm having six aperture blades 104 arranged at equal intervals around the circumferential direction of the second drive ring 112 so that portions of the blades overlap each other in the optical axis direction, forming an aperture stop corresponding to the second optical system 301. Six rotation holes 112c are formed in the second drive ring 112 at equal intervals around the circumferential direction. The rotary pins 104a of the six aperture blades 104 rotatably fit into the corresponding rotation holes 112c in the second drive ring 112.

The first and second aperture stops are not limited to those having six aperture blades, and may be any iris diaphragm having three or more aperture blades.

The first cam plate 103 is disposed so that the first drive ring 102 and the six aperture blades 104 for the first aperture stop are sandwiched between the first cam plate 103 and the aperture base plate 101, and is fixed to the aperture base plate 101 with screws. A first opening 103a corresponding to the first optical system 201 is formed in the first cam plate 103. Six cam grooves 103c are formed around the first opening 103a in the first cam plate 103, arranged at regular intervals in the circumferential direction. In the first aperture stop, each cam pin 104b of the six aperture blades 104 is engaged with a corresponding one of the cam grooves 103c.

The second cam plate 113 is disposed so that the second drive ring 112 and the six aperture blades 104 for the second aperture stop are sandwiched between the second cam plate 113 and the aperture base plate 101, and is fixed to the aperture base plate 101 with screws. A second opening 113a corresponding to the second optical system 301 is formed in the second cam plate 113. Six cam grooves 113c are formed around the second opening 113a in the second cam plate 113, arranged at regular intervals in the circumferential direction. In the second aperture stop, each cam pin 104b of the six aperture blades 104 is engaged with a corresponding one of the cam grooves 113c.

Due to this structure, when the drive rings (102, 112) rotate due to the rotation of the aperture motor 105, the rotary pins 104a of each aperture blade 104 move circumferentially along with the drive rings. At the same time, the cam pins 104b of each aperture blade 104 move along the cam grooves (103c, 113c) in the cam plates (103, 113), causing each aperture blade 104 to rotate (pivot) around the rotary pins 104a in the opening/closing direction. Thereby, the aperture diameter (aperture value (F-number)) formed by the six aperture blades 104 in each of the first and second aperture stops. The lens control unit 204 controls the drive direction of the aperture motor 105 (i.e., the aperture-value changing direction) by changing the polarity of the drive pulse signal applied to the aperture motor 105, and controls the drive position of the aperture motor 105 (i.e., aperture value) by counting the number of pulses in the drive pulse signal. A sensor may be provided to detect the maximum aperture of each aperture stop.

In this embodiment, each drive ring (102, 112) is formed with the rotation holes (102c, 112c) with which the rotary pins 104a of each aperture blade are engaged, and each cam plate (103, 113) is formed with cam grooves (103c, 113c) with which the cam pins 104b of each aperture blade are engaged. However, each drive ring may be formed with a cam groove with which the cam pins of each aperture blade are engaged, and rotation holes with which the rotary pins of each aperture blade are engaged may be formed on a holder equivalent to the cam plate.

A fitting portion (engagement portion) 103b is provided on the outer circumference of the first cam plate 103. The fitting portion 103b rotatably fits into a fitting portion 101m provided on the inner circumference of the aperture base plate 101. Thereby, the first cam plate 103 is held rotatably around the central axis of the first opening 101a in the aperture base plate 101. Screw insertion portions 103e are provided at three circumferential positions on the outer circumference of the first cam plate 103. Each screw insertion portion 103e has a slot (elongated hole) shape extending in the circumferential direction of the first cam plate 103. A screw inserted into each screw insertion portion 103e is fastened into a screw hole provided around the first opening 101a of the aperture base plate 101. Thereby, the first cam plate 103 can be attached to the aperture base plate 101 so that its circumferential phase (rotational position) can be adjusted by the length of the slot in each screw insertion portion 103e.

An adjuster receiver 103d is provided on part of the outer circumference of the first cam plate 103. A first phase adjuster 107 is disposed inside the adjuster receiver 103d so that it contacts the inner surface of the adjuster receiver 103d in the circumferential direction of the first cam plate 103. The first phase adjuster 107 is rotatably attached to the aperture base plate 101 inside the adjuster receiver 103d by inserting a screw into the central hole of the first phase adjuster 107 and tightening it into the screw hole 101g in the aperture base plate 101. Thereby, the first adjusting mechanism is structured.

A fitting portion 113b is provided on the outer circumference of the second cam plate 113. The fitting portion 113b rotatably fits into a fitting portion 101n provided on the inner circumference of the aperture base plate 101. Thereby, the second cam plate 113 is held rotatably around the central axis of the second opening 101b in the aperture base plate 101. Screw insertion portions 113e are provided at three circumferential positions on the outer circumference of the second cam plate 113. Each screw insertion portion 113e has a slot (elongated hole) shape extending circumferentially of the second cam plate 113. A screw inserted into each screw insertion portion 113e is fastened into a screw hole provided around the second opening 101b of the aperture base plate 101. Thereby, the second cam plate 113 can be attached to the aperture base plate 101 so that its circumferential phase (rotational position) can be adjusted by the length of the slot in each screw insertion portion 113e.

An adjuster receiver 113d is also provided on part of the outer circumference of the second cam plate 113. A second phase adjuster 117 is disposed inside the adjuster receiver 113d so that it contacts the inner surface of the adjuster receiver 113d in the circumferential direction of the second cam plate 113. The second phase adjuster 117 is rotatably attached to the aperture base plate 101 inside the adjuster receiver 113d by inserting a screw into the central hole and tightening it into a screw hole (not illustrated) in the aperture base plate 101. Thereby, the second adjusting mechanism is structured.

Each cam plate (103, 113) may be rotatably attached to the aperture base plate 101 using an attachment structure other than the screw and slot attachment structure described above, such as a bayonet structure. While this embodiment provides an adjusting mechanism for each of the first and second aperture stops, an adjusting mechanism may be provided for only one of the first and second aperture stops.

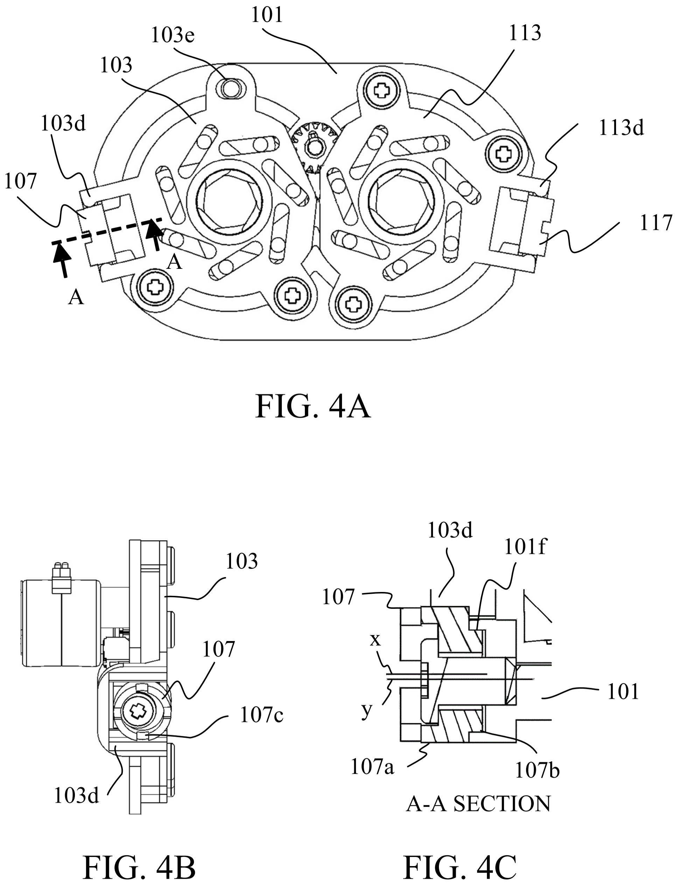

Next, the operations of the first and second adjusting mechanisms will be described with reference to Figs. 4A, 4B, and 4C. Since the second adjusting mechanism has the same structure as that of the first adjusting mechanism, only the operation of the first adjusting mechanism will be described. Fig. 4A illustrates the light-amount control apparatus 100 viewed from the optical axis direction (the direction in which the central axes of the openings 101a and 101b extend). Fig. 4B illustrates the first adjusting mechanism viewed from the axial direction of the first phase adjuster 107. Fig. 4C illustrates an enlarged cross section taken along line A-A in Fig. 4A.

As illustrated in Fig. 4C, the first phase adjuster 107 is an eccentric member having a fitting portion 107b in which its central axis is defined as axis x, which serves as a rotation center, and a cylindrical eccentric surface 107a in which its central axis is defined as axis y, which is eccentric relative to the axis x. The axes x and y extend in a direction perpendicular to the optical axis of the light-amount control apparatus 100. Δ is an eccentricity amount of the axis y relative to the axis x. The fitting portion 107b is fitted and held in a fitting portion 101f having a concave shape provided on the aperture base plate 101 rotatably around the axis x. The eccentric surface 107a contacts the inner surface of the adjuster receiver 103d provided on the first cam plate 103 in the circumferential direction of the first cam plate 103.

A dividing line 107c is provided at the tip of the first phase adjuster 107, and by engaging a jig such as a screwdriver with the dividing line 107c, the first phase adjuster 107 can be rotated around the axis x. When the first phase adjuster 107 rotates, the eccentric surface 107a presses the inner surface of the adjuster receiver 103d in the circumferential direction of the first cam plate 103. Thereby, the first cam plate 103 rotates relative to the aperture base plate 101 while the screw insertion portion 103e is guided by the screw. In other words, the phase of the first cam plate 103 relative to the aperture base plate 101 changes. As a result, a relationship (relative phase) between the phase of the first drive ring 102 and the phase of the first cam plate 103 also changes. The phase of the first cam plate 103 corresponds to the rotational position of each aperture blade 104. Therefore, changing the phase of the first cam plate 103 relative to the first drive ring 102 changes the rotational position of each aperture blade 104 relative to the phase of the first drive ring 102, and thus the aperture diameter of the first aperture stop.

In this way, rotating the first phase adjuster 107 can adjust the aperture diameter of the first aperture stop (for example, the maximum aperture diameter) relative to the phase of the first drive ring 102.

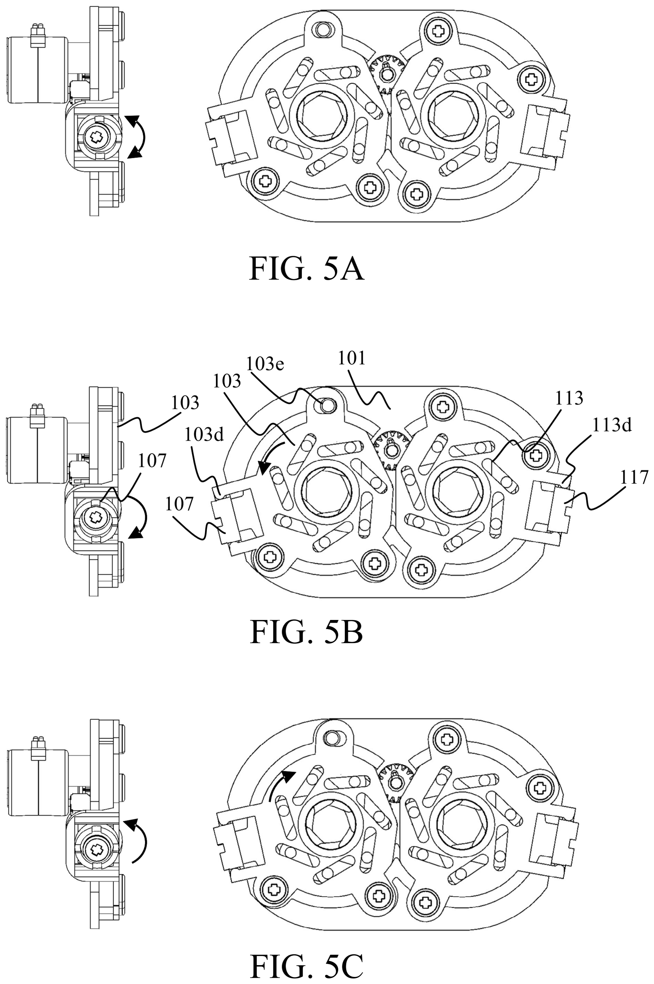

Figs. 5A, 5B, and 5C illustrate the adjustment of the aperture diameter of the first aperture stop by rotating the first phase adjuster 107. When the first phase adjuster 107 is rotated clockwise (as illustrated on the left) from the neutral state illustrated in Fig. 5A to a state illustrated in Fig. 5B, the first cam plate 103 rotates counterclockwise (as illustrated on the right). The aperture diameter of the first aperture stop increases (i.e., the light amount increases) according to the rotation amount (phase change amount) of the first cam plate 103 at this time.

When the first phase adjuster 107 is rotated counterclockwise as illustrated in the left diagram from the neutral state illustrated in Fig. 5A to a state illustrated in Fig. 5C, the first cam plate 103 rotates clockwise as illustrated in the right diagram. The aperture diameter of the first aperture stop becomes smaller (i.e., the light amount decreases) according to the phase change amount of the first cam plate 103 at this time.

The phase change amount of the first cam plate 103 relative to the rotation amount of the first phase adjuster 107 (also referred to as adjustment sensitivity hereinafter) can be changed by changing the eccentricity amount Δ of the first phase adjuster 107. More specifically, increasing the eccentricity amount Δ increases the phase rotation amount of the first cam plate 103 per unit rotation amount of the first phase adjuster 107, and decreasing the eccentricity amount Δ decreases the phase rotation amount of the first cam plate 103.

After the aperture diameter of the first aperture stop (for example, the maximum aperture diameter) is adjusted in this manner, the first cam plate 103 is adhered and fixed to the aperture base plate 101, and the first phase adjuster 107 is adhered and fixed to the aperture base plate 101. However, the first phase adjuster 107 may be rotatably held without the adhesion so that in a case where a light amount difference occurs between the first and second aperture stops during actual use of the stereoscopic optical unit 20, the light amount difference can be reduced.

The first phase adjuster 107 may be divided into a first portion coaxial with the axis x and a second portion eccentric relative to the axis x, the first portion may be rotatably attached to the aperture base plate 101, and the second portion may be brought into contact with the adjuster receiver 103d of the first cam plate 103.

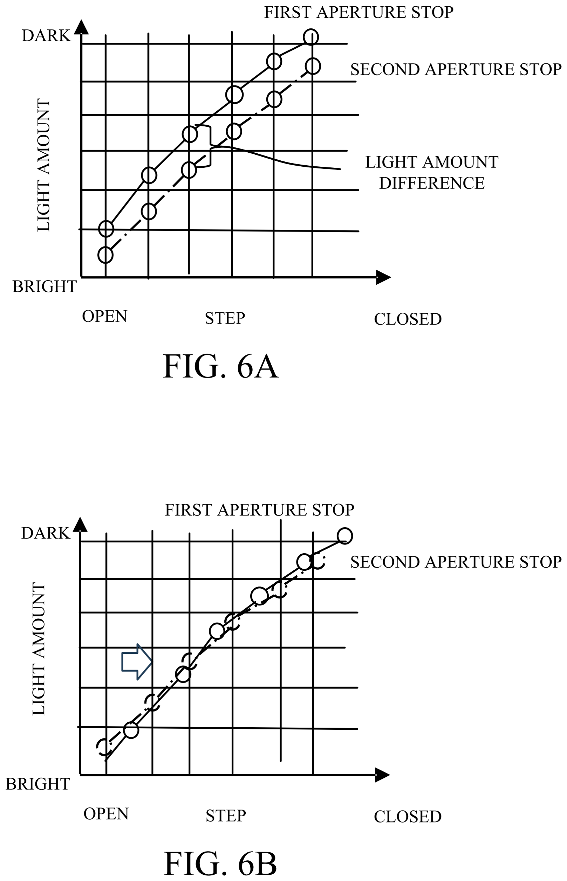

The effect of adjusting the aperture diameter of the first aperture stop to match the aperture diameter of the second aperture stop will be illustrated with reference to Figs. 6A and 6B. Figs. 6A and 6B illustrate a relationship between the drive amount of the aperture motor 105 (the number of drive pulses = steps from an open state to a closed state) and a light amount. A horizontal axis represents a drive amount, and a vertical axis represents a light amount.

In this embodiment, the first and second aperture stops use the same first and second drive rings 102 and 112, first and second cam plates 103 and 113, aperture blades 104, and first and second phase adjusters 107 and 117. Thereby, a change amount in the aperture diameter per unit drive amount of the aperture motor 105 (a slope of the graph in Figs. 6A and 6B) can be approximately the same.

Fig. 6A illustrates a state before the aperture diameter of the first aperture stop is adjusted. At this time, there is a difference between the aperture diameters of the first and second aperture stops (and therefore the light amounts) due to variations in manufacturing and assembly errors. On the other hand, Fig. 6B illustrates a state after the light amount of the first aperture stop has been adjusted to match the light amount of the second aperture stop. By adjusting the light amount of the first aperture stop while it is compared with the light amount of the second aperture stop, the light amount difference between the first and second aperture stops can be reduced. The aperture diameter of the second aperture stop may also be adjusted to match the light amount of the first aperture stop.

### SECOND EMBODIMENT

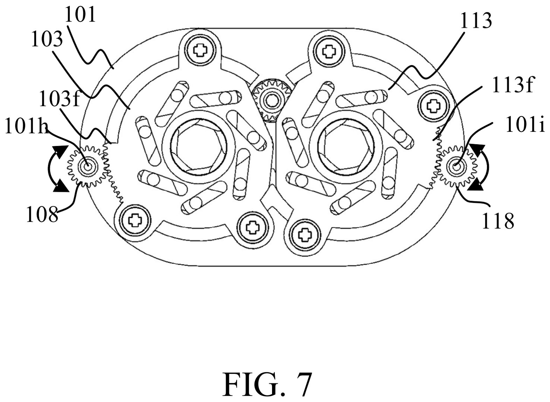

Fig. 7 illustrates a light-amount control apparatus 100 according to the second embodiment viewed from the optical axis direction. This embodiment differs from the first embodiment in the structure of the first and second adjusting mechanisms. Other structures are the same as those of the first embodiment.

A gear portion 103f is provided on the outer circumference of the first cam plate 103. The gear portion 103f is engaged with a first adjustment gear 108, which serves as a rotation operating member and is rotatably supported on a shaft portion 101h provided on the aperture base plate 101. Thus, when the first adjustment gear 108 is rotated around the shaft portion 101h, the rotation is decelerated and transmitted to the first cam plate 103 via the gear portion 103f. Thereby, the first cam plate 103 rotates around the central axis of the opening 101a of the aperture base plate 101, and the phase of the first cam plate 103 changes relative to the first drive ring 102. Thereby, the first adjusting mechanism is structured.

A gear portion 113f is provided on the outer circumference of the second cam plate 113. This gear portion 113f is engaged with a second adjustment gear 118, which serves as a rotation operating member rotatably supported on a shaft portion 101i provided on the aperture base plate 101. Thus, when the second adjustment gear 118 is rotated around the shaft portion 101i, the rotation is decelerated and transmitted to the second cam plate 113 via the gear portion 103f. Thereby, the second cam plate 113 rotates around the central axis of the opening 101b of the aperture base plate 101, and the phase of the second cam plate 113 changes relative to the second drive ring 112. Thereby, the second adjusting mechanism is structured.

The greater the reduction ratio of the gear portions 103f and 113f to the first and second adjustment gears 108 and 118 is, the lower the adjustment sensitivity is.

This embodiment provides an adjusting mechanism for each of the first and second aperture stops, but an adjusting mechanism may be provided for only one of the first and second aperture stops.

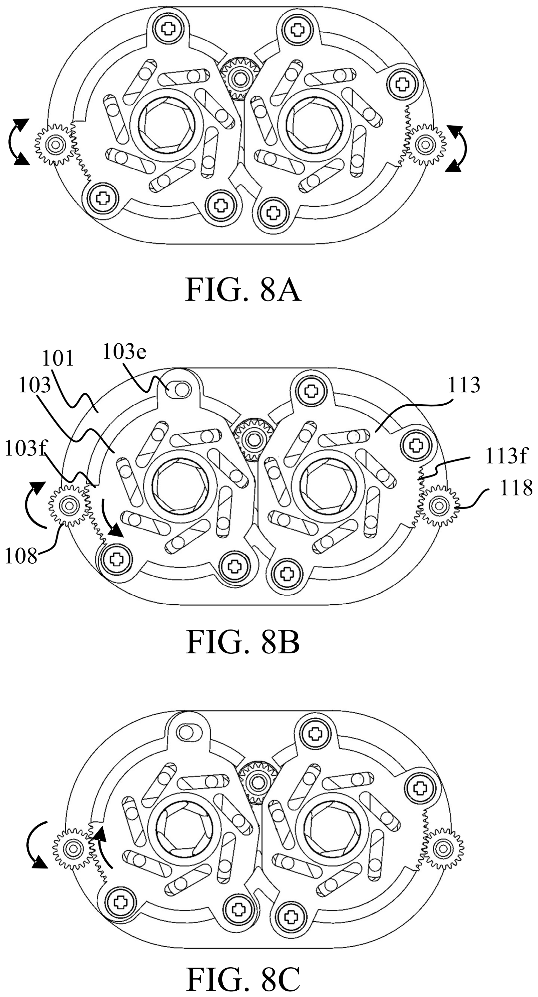

Figs. 8A, 8B, and 8C illustrate the adjustment of the aperture diameter of the first aperture stop due to rotation of the first adjustment gear 108. When the first adjustment gear 108 is rotated clockwise from the neutral state illustrated in Fig. 8A to a state illustrated in Fig. 8B, the first cam plate 103 rotates counterclockwise. The aperture diameter of the first aperture stop increases (i.e., the light amount increases) in accordance with the phase change amount of the first cam plate 103 at this time.

When the first adjustment gear 108 is rotated counterclockwise from the neutral state illustrated in Fig. 8A to a state as illustrated in Fig. 8C, the first cam plate 103 rotates clockwise. At this time, the aperture diameter of the first aperture stop decreases (i.e., the light amount decreases) according to the phase change amount of the first cam plate 103.

After the aperture diameter of at least one of the first and second aperture stops is adjusted as described above, the first and second adjustment gears 108 and 118 may be removed. At least one of the first and second adjustment gears 108 and 118 may be reattached to reduce any light amount difference between the first and second aperture stops that occurs during actual use of the stereoscopic optical unit 20.

Instead of rotating the cam plate using each adjustment gear, a structure may be adopted in which the cam plate is rotated by friction using a rotatable roller.

### THIRD EMBODIMENT

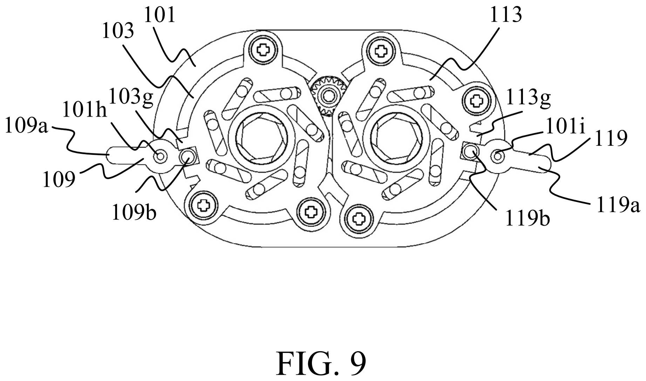

Fig. 9 illustrates a light-amount control apparatus 100 according to a third embodiment viewed from the optical axis direction. This embodiment differs from the first and second embodiments in the structure of the first and second adjusting mechanisms. Other structures are the same as those of the first and second embodiments.

A coupler 103g is provided on the outer circumference of the first cam plate 103. The coupler 103g is engaged with an action part 109b, which is one end of a first adjustment lever 109 and is rotatably supported on a shaft portion 101h provided on the aperture base plate 101 as a fulcrum. When an operation part 109a, which is the other end of the first adjustment lever 109, is operated to rotate the first adjustment lever 109 around the shaft portion 101h (around the fulcrum), the rotation of the action part 109b (i.e., rotational force) is transmitted to the first cam plate 103 via the coupler 103g. Thereby, the first cam plate 103 is rotated around the central axis of the opening 101a of the aperture base plate 101, and the phase of the first cam plate 103 changes relative to the first drive ring 102. Thus, the first adjusting mechanism is structured.

A coupler 113g is provided on the outer circumference of the second cam plate 113. The coupler 113g is engaged with an action part 119b, which is one end of a second adjustment lever 119 and is rotatably supported on a shaft portion 101i provided on the aperture base plate 101. When an operation part 119a, which is the other end of the second adjustment lever 119, is operated to rotate the second adjustment lever 119 around the shaft portion 101i, the rotation (rotational force) of the action part 119b is transmitted to the second cam plate 113 via the coupler 113g. Thereby, the second cam plate 113 is rotated around the central axis of the opening 101b of the aperture base plate 101, and the phase of the second cam plate 113 changes relative to the second drive ring 112. Thus, the second adjusting mechanism is structured.

In the first and second adjustment levers 109 and 119, the second length from the shaft portions 101h and 101i to the action parts 109b and 119b is shorter than the first length from the operation parts 109a and 119a to the shaft portions 101h and 101i that serve as fulcrums. Thus, a rotation amount of each action part, or that is, a rotation amount of each cam plate, is small relative to an operation amount of each operation part. The smaller the ratio of the second length to the first length is, the lower the adjustment sensitivity can be.

This embodiment provides an adjusting mechanism for each of the first and second apertures, but an adjusting mechanism may be provided for only one of the first and second apertures.

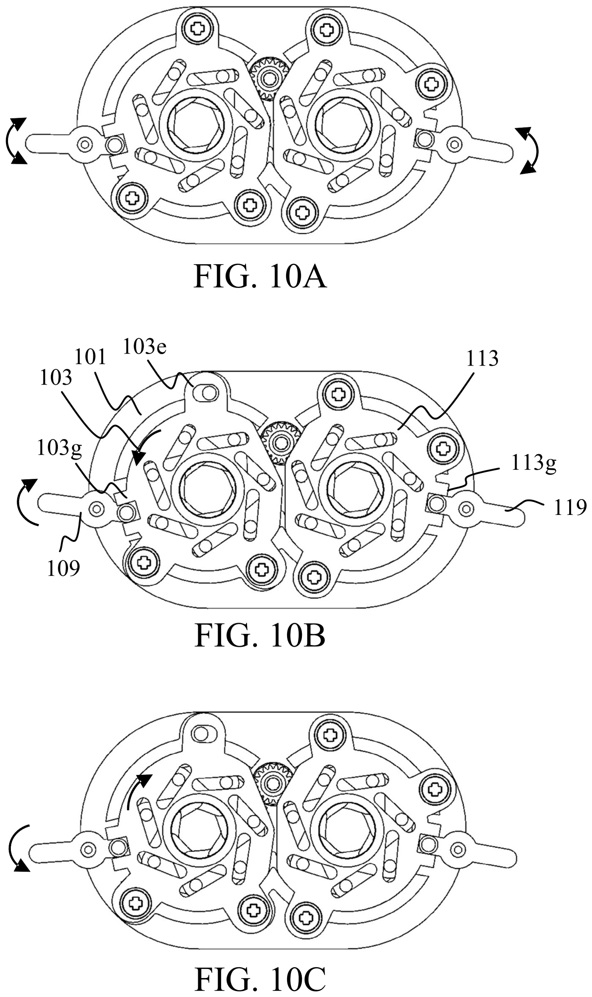

Figs. 10A, 10B, and 10C illustrate the adjustment of the aperture diameter of the first aperture stop by rotating the first adjustment lever 109. When the first adjustment lever 109 is rotated clockwise from the neutral position illustrated in Fig. 10A to a state illustrated in Fig. 10B, the first cam plate 103 rotates counterclockwise. The aperture diameter of the first aperture stop increases (i.e., the light amount increases) according to the phase change amount of the first cam plate 103 at this time.

When the first adjustment lever 109 is rotated counterclockwise from the neutral state illustrated in Fig. 10A to a state illustrated in Fig. 10C, the first cam plate 103 rotates clockwise. The aperture diameter of the first aperture stop decreases (i.e., the light amount decreases) in accordance with the phase change amount of the first cam plate 103 at this time.

After the aperture diameter of at least one of the first and second aperture stops is adjusted as described above, the first and second adjustment levers 109 and 119 may be removed. At least one of the first and second adjustment levers 109 and 119 may be reattached so as to reduce any light amount difference between the first and second aperture stops that occurs during actual use of the stereoscopic optical unit 20.

### FOURTH EMBODIMENT

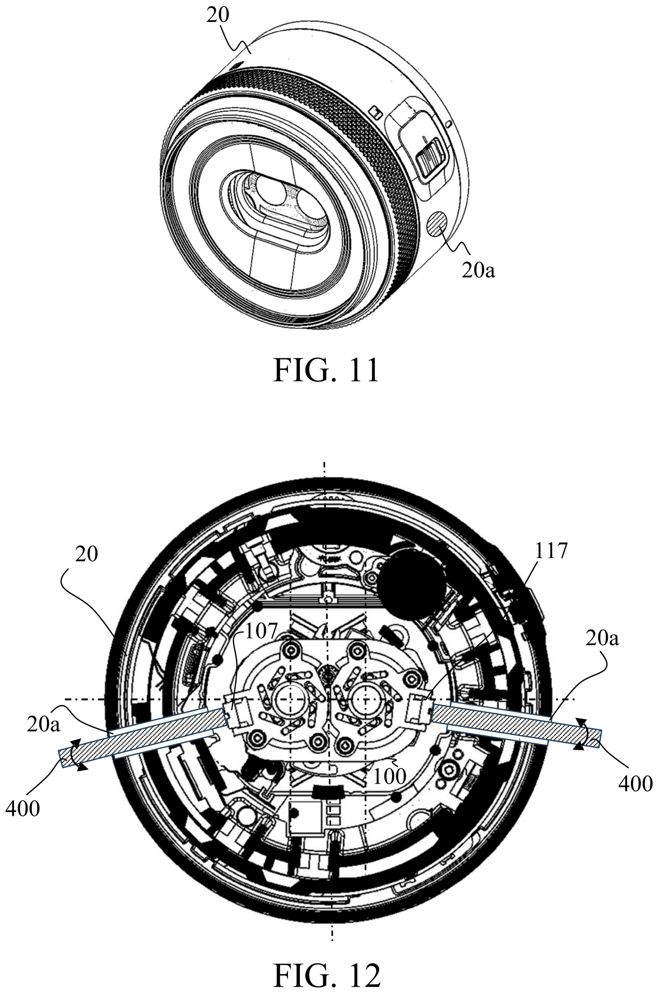

Fig. 11 illustrates an appearance of the stereoscopic optical unit 20 including the light-amount control apparatus 100 according to the first embodiment. Fig. 12 illustrates a cross section perpendicular to the optical axis of the stereoscopic optical unit 20.

The outer circumferential surface of the stereoscopic optical unit 20 has two adjustment holes (openings) 20a into which a tool 400 such as a screwdriver can be inserted to externally adjust the first and second phase adjusters 107 and 117 of the light-amount control apparatus 100. The tool 400 inserted into the stereoscopic optical unit 20 through the adjustment hole 20a can be engaged with and rotate the first and second phase adjusters 107 and 117. Thereby, the phases of the first and second cam plates 103 and 113 can be changed as illustrated in Figs. 5B and 5C, and thereby the aperture diameters (light amount) of the first and second aperture stops can be adjusted.

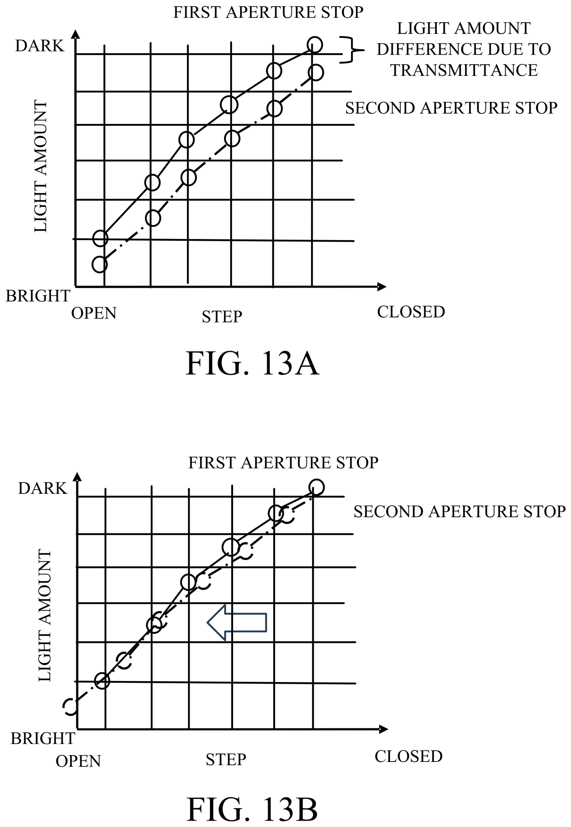

Figs. 13A and 13B illustrate the effect of adjusting the light amount of the second aperture stop to match that of the first aperture stop. Figs. 13A and 13B illustrate a relationship between a drive amount (number of drive pulses from an open state to a closed state = steps) of the aperture motor 105 and the light amount. A horizontal axis represents a drive amount, and a vertical axis represents a light amount.

Fig. 13A illustrates the state before the light amount of the second aperture stop is adjusted. At this time, there is a light amount difference between the first and second aperture stops due to variations in manufacturing and assembly errors, as well as a transmittance difference between the first and second optical systems 201 and 301. On the other hand, Fig. 13B illustrates a state after the light amount of the second aperture stop is adjusted to match the light amount of the first aperture stop brighter than the second aperture stop. Adjusting the light amount of the second aperture stop while the light amount of the first aperture stop is compared with the light amount of the second aperture stop can reduce a light amount difference between the first and second aperture stops. The light amount of the first aperture stop may also be adjusted to match the light amount of the second aperture stop.

The adjusting mechanism described in the first to third embodiments rotates the cam plates (103, 113) as the holders to adjust the phases of the cam plates relative to the drive rings (102, 112) as the rotators. Alternatively, an adjusting mechanism may adjust the phase of the drive ring relative to the cam plate by rotating the drive ring. For example, after disengaging the pinion gear (106) of the aperture motor (105) from the drive ring to be adjusted, an adjusting mechanism may rotate the drive ring to change the phase relative to the corresponding cam plate, and then return the engagement after the change. Alternatively, an idler gear may be provided between the pinion gear and drive ring, and an adjusting mechanism may disengage the idler gear from the pinion gear or drive ring, then rotate the drive ring to change the phase relative to the corresponding cam plate, and then return the engagement after the change. Moreover, a body of the drive ring that holds the rotary pins (104a) of the aperture blades and gear portions (102b, 112b) provided on the outer circumference of the body may be separately produced. An adjusting mechanism may rotate the body relative to the gear portion while the gear portion is engaged with the pin-on gear to change the phase of the drive ring (body) relative to the cam plate, and then fix the body and gear portion after the change.

The above embodiments drive the two aperture stops using the single drive source, but may drive the two aperture stops using two drive sources (a first drive source and a second drive source) provided to the respective aperture stops. In this case, an adjusting mechanism can adjust a light amount passing through at least one of the first and second aperture stops independently of a light amount passing through the other aperture stop and the states of the first and second drive sources.

While the disclosure has described example embodiments, it is to be understood that the disclosure is not limited to the example embodiments. The scope of the following claims is to be accorded the broadest interpretation so as to encompass all such modifications and equivalent structures and functions.

Each embodiment according to the disclosure can provide a control apparatus and an optical apparatus, each of which can reduce a light amount difference between the two optical systems.

## Claims

1. A stop apparatus (100) configured to determine a light amount in each of a first optical system (201) and a second optical system (301) that are arranged in parallel, the stop apparatus comprising:
a single drive source;
a first aperture stop to be driven by the drive source to change the light amount in the first optical system;
a second aperture stop to be driven by the drive source to change the light amount in the second optical system; and
an adjusting mechanism configured to adjust a light amount passing through one of the first aperture stop and the second aperture stop independently of a light amount passing through the other one of the first aperture stop and the second aperture stop.

2. The stop apparatus according to claim 1, **characterized in that** each of the first aperture stop and the second aperture stop includes a plurality of aperture blades (104), a holder (103, 113) that holds the plurality of aperture blades, and a rotator (102, 112) rotatable relative to the holder by the drive source to drive the plurality of aperture blades,
wherein the adjusting mechanism changes a relative phase between the holder and the rotator in at least one of the first aperture stop and the second aperture stop.

3. The stop apparatus according to claim 2, **characterized in that** the adjusting mechanism changes the relative phase by receiving an operation from an outside of the stop apparatus.

4. The stop apparatus according to claim 3, **characterized in that** the adjusting mechanism includes an eccentric member (107) having an eccentric surface eccentric to a rotation center, and changes a phase of the holder relative to the rotator by rotating the eccentric member using the operation.

5. The stop apparatus according to claim 3, **characterized in that** the adjusting mechanism changes a phase of the holder relative to the rotator by rotating the holder via an operation member that receives the operation.

6. The stop apparatus according to claim 5, **characterized in that** the operation member is a rotationally operable member,
wherein the operation member decelerates a rotation and transmits the rotation to the holder.

7. The stop apparatus according to claim 5, **characterized in that** the operation member is a lever rotatable around a fulcrum,
wherein a length from an operation part of the lever to the fulcrum is shorter than a length from the fulcrum to an action part that transmits rotational force to the holder.

8. A stop apparatus (100) configured to determine a light amount in each of a first optical system (201) and a second optical system (301) that are arranged in parallel, the stop apparatus comprising:
a first drive source;
a second drive source;
a first aperture stop to be driven by the first drive source to change the light amount in the first optical system;
a second aperture stop to be driven by the second drive source to change the light amount in the second optical system; and
an adjusting mechanism configured to adjust a light amount passing through one of the first aperture stop and the second aperture stop independently of a light amount passing through the other one of the first aperture stop and the second aperture stop.

9. An optical apparatus (10) comprising:
the stop apparatus (100) according to any one of claims 1 to 8;
the first optical system (201); and
the second optical system (301).

10. The optical apparatus according to claim 9, **characterized in that** the optical apparatus has an opening (20a) through which the adjusting mechanism is operable from outside.
